# EUROPEAN PATENT APPLICATION

(11) **EP 1 580 870 A2**
(43) Date of publication of application: **28.09.2005**
(21) Application number: 04257168.7
(22) Date of filing: 19.11.2004
(51) Int. Cl.: H02K 21/22

(54) **BLDC motor**

(30) Priority: 04.03.2004 KR 2004014712
(71) Applicant: LG ELECTRONICS INC., Seoul 150-721 (KR)
(72) Inventor: Ahn, In Geun, Changwon-si Gyeongsangnam-do (KR)
(74) Representative: DIEHL GLAESER HILTL & PARTNER

(57) **Abstract**

BLDC motor including a stator having a core, and coils each of which forms at least one pole, a rotor having magnets to form a number of poles more than the poles on the stator, the rotor being provided to be rotatable by a rotating magnetic field formed between the poles, at least one Hall sensor for detecting a pulse signal generated during rotation of the rotor, and a controller for controlling power to be applied to the coils in response to the pulse signal, thereby enabling to rotate a large capacity drum.

## Description

The present invention relates to BLDC motors (Brushless Direct Current Motor), and more particularly, to a washing machine having a BLDC motor.

In general, a washing machine washes laundry by the softening action of detergent, and the friction of the laundry; with water circulation caused by rotation of a pulsator or drum. Demand for drum type washing machines increases day by day, particularly for those with a reduced total height compared to a pulsator type washing machine, and which prevent wrinkles from forming.

The drum type washing machine washes laundry by friction between the laundry in the drum rotated by the driving force of the motor and washing water after the detergent, the washing water, and the laundry are introduced into the drum. The drum type washing machine does not damage the laundry, causes no entangling of the laundry, and can provide an effective washing by pounding and rubbing.

Drum type washing machines can be of the indirect driving type, or direct driving type. The indirect driving type transmits a rotation force from the motor to a rotation shaft which is connected to the drum through a belt and a pulley, and, in the direct driving type, a washing shaft which is connected to the drum is connected to a rotor of the motor, directly.

In the direct driving type, a motor is provided to the rear of the drum, and the motor and the drum are directly coupled with a rotation shaft. Therefore, if the axial thickness of the motor becomes greater, relative to this, the space for putting the drum therein is reduced.

Moreover, in order to make the drum larger, to have a greater capacity, the motor is required to have a greater rotation force, and that in turn makes a volume of the motor substantially greater.

Accordingly, the present invention is directed to a large capacity drum type washing machine that substantially obviates one or more problems due to limitations and disadvantages of the prior art.

The present invention is set out in the independent claims. Some optional features are set out in the claims dependent thereto.

According to one embodiment there is provided a large capacity drum type washing machine which has an improved BLDC motor for rotating a large capacity drum.

According to one embodiment, there is provided a BLDC motor including a stator having a core, and coils each of which forms at least one pole, a rotor having magnets to form a number of poles more than the poles on the stator, the rotor being provided to be rotatable by a rotating magnetic field formed between the poles, at least one Hall sensor for detecting a pulse signal generated during rotation of the rotor, and a controller for controlling power to be applied to the coils in response to the pulse signal.

Preferably, the Hall sensor is provided between the coils of the stator. The stator may includes 36 or more poles. Preferably, the stator includes 36 poles, and the rotor includes 48 poles. The core may have an axial width of 16mm or less and the rotor may be provided around the stator.

In another aspect of the present invention, a BLDC motor is provided that includes a stator having a core, and coils each of which forms at least one pole, a rotor having magnets to form a number of poles more than the poles on the stator, the rotor being rotatably provided around the stator, at least one Hall sensor between coils of the stator for detecting a pulse signal generated during rotation of the rotor, and a controller for controlling power to be applied to the coils in response to the pulse signal detected at the Hall sensor.

Preferably the stator includes 36 poles, and the rotor includes 48 poles. The core may have an axial width of 16mm or less.

In another aspect of the present invention there is provided a large capacity pulsator type washing machine including a BLDC motor as described herein.

In another aspect of the present invention there is provided a large capacity drum type washing machine including a cabinet forming an exterior of the washing machine, a drum rotatably mounted on an inside of the cabinet for holding laundry, a BLDC motor including a stator having a core, and coils each of which forms at least one pole, a rotor having magnets to form a number of poles more than the poles on the stator, the rotor being provided to be rotatable by a rotating magnetic field formed between the poles, Hall sensors for detecting a pulse signal generated during rotation of the rotor, and a controller for controlling power to be applied to the coils in response to the pulse signal, and a rotating shaft coupled between the drum and the BLDC motor.

Preferably the Hall sensor is provided between the coils of the stator. The stator may include 36 or more poles. Preferably, the stator includes 36 poles, and the rotor includes 48 poles. The core has an axial width of 16mm or less. The BLDC motor and the rotating shaft may be connected with a belt and a pulley.

In another aspect of the present invention there is provided a large capacity drum type washing machine including a cabinet forming an exterior of the washing machine, a drum rotatably mounted on an inside of the cabinet for holding laundry, a BLDC motor including a stator having a core, and coils each of which forms at least one pole, a rotor having magnets to form a number of poles more than the poles on the stator, the rotor being rotatably provided around the stator, Hall sensors for detecting a pulse signal generated during rotation of the rotor, and a controller for controlling power to be applied to the coils in response to the pulse signal, and a rotating shaft directly connected between the drum and the BLDC motor.

The Hall sensor may be provided between the coils of the stator. The stator may include 36 or more poles. Preferably, the stator includes 36 poles, and the rotor includes 48 poles, and the core has an axial width of 16mm or less.

The BLDC motor enables a more accurate control of power input.

The accompanying drawings, which are included to provide a further understanding of the invention and are incorporated in and constitute a part of this application, illustrate embodiment(s) of the invention and together with the description serve to explain the principle of the invention. In the drawings;
FIG 1 illustrates a section of a direct driving type washing machine;
FIG. 2 illustrates a perspective view of a stator in accordance with a preferred embodiment of the present invention;
FIG 3 illustrates a graph showing the relation of a signal detected at a Hall sensor with a phase angle of a current applied to a stator in response to the signal during rotation of the rotor of the present invention; and
FIG. 4 illustrates a table showing a number of poles of a stator and a rotor of the present invention.

Reference will now be made in detail to the preferred embodiments of the present invention, examples of which are illustrated in the accompanying drawings. Wherever possible, the same reference numbers will be used throughout the drawings to refer to the same or like parts.

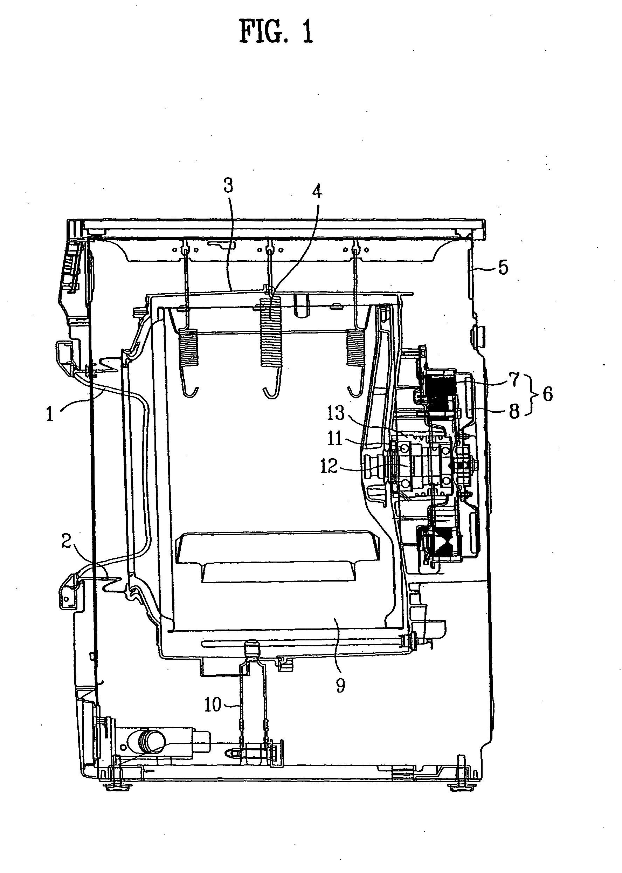

Referring to FIG. 1, there is a tub 3 in a cabinet 5 which forms an exterior of a drum type washing machine, and a drum 9 is rotatably mounted on an inside of the tub 3. On a front of the cabinet 5, there is a door 1 for introduction of laundry, and between the door 1 and the tub 3, there is a gasket 2.

The tub 3 has an upper outside circumference thereof hung from the cabinet 5 with springs 5, and a lower portion supported on a friction damper 10 for attenuating vibration.

To the rear of the tub 3, there is a BLDC (Brushless Direct Current) motor 6 mounted thereon.

Although the BLDC motor 6 and the rotation shaft 12 may be coupled indirectly with a belt and a pulley, it is preferable that the motor 6 and the drum 9 are coupled directly with a rotation shaft 12 in a large capacity washing machine that requires a great torque. The rotation shaft 12 has bearings 11 on front/rear sides thereof, and the tub 3 has a bearing housing 13 on a rear surface for supporting the bearings 11.

The motor 6 includes a stator 7 and a rotor 8, wherein the stator 7 is fixedly secured to the rear surface of the tub 3, and the rotor 8 is coupled to the rotation shaft 12. Upon application of power to the stator 7, a rotating magnetic field is formed between the rotor 8 and the stator 7. When the rotor 8 rotates, the drum 9 directly coupled to the rotor 8 rotates at the same time.

In order to form the rotating magnetic field of a desired level between the stator 7 and the rotor 8 for rotating the drum 9, it is required that the facing areas of the stator 7 and the rotor 8 are large. For this, the stator 7 has a great width in an axial direction of the rotating shaft 12.

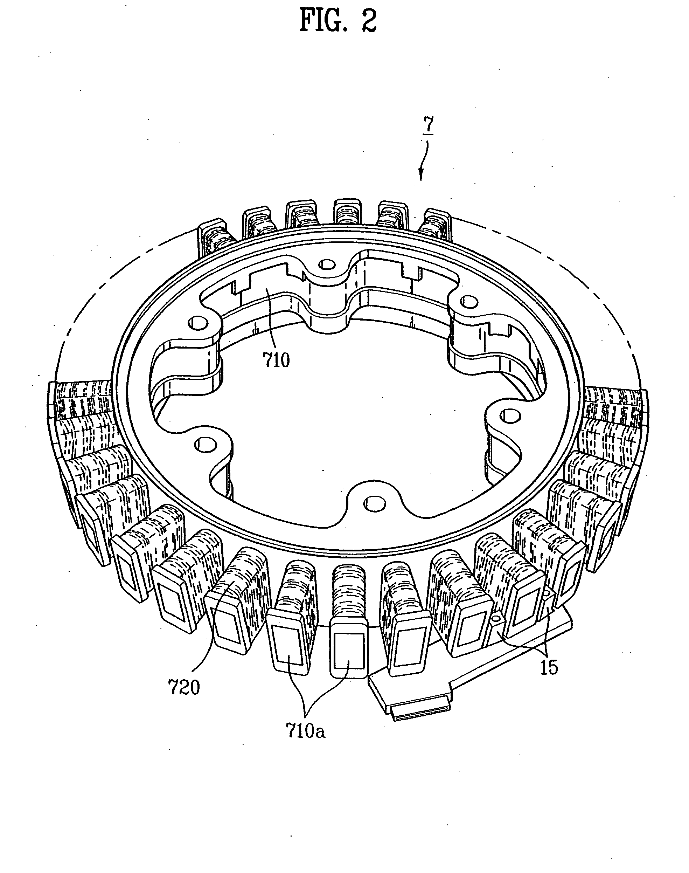

Referring to FIGS. 1 and 2, the BLDC motor of the present invention includes a stator 7, a rotor 8, a Hall sensor 15, and a controller (not shown). The stator 7 includes a core 710, and coils which form a plurality of poles. In more detail, from an outside circumferential surface of an annular core 710, there are a plurality of projections 710a in a radial direction at regular intervals in a circumferential direction, with the coil 720 wound around the projection 710a. Upon application of power to the coil 720, the projection 710a and the coil 720 function as an electric magnetic.

The rotor 8 is rotatable by the rotating magnetic field formed between the poles, and includes magnets which form more poles than the stator 7. The stator 7 has at least one Hall sensor 15 (Hall-effect sensor) provided thereto for detecting a pulse signal from the rotor 8 produced when the rotor 8 rotates.

In the meantime, the controller controls the power applied to the coils 720 in response to the pulse signal detected at the Hall sensor 15. More specifically, the controller controls a phase angle of a current applied to the coil.

The stator 7 includes the core 710 and the coils 720. As described before, the stator 7 has the projections 710a from the outside circumferential surface thereof at regular intervals in the circumferential direction, each with the coil 720 wound therearound. Upon application of power to the coil 720, the coil 720 and the projection 710a function as an electric magnet.

It is preferable that the rotor 8 is rotatably provided around the stator 7. The rotor 8 has a plurality of permanent magnets on an inside circumferential surface, so that the rotating magnetic field is formed between the electric magnets on the stator 7 and the permanent magnets on the rotor 8. The rotor 8 rotates by the rotating magnetic field, and a rotating force of the rotor 8 is transmitted to the drum 9 through the rotation shaft. The rotating force is proportional to an intensity of the rotating magnetic field.

In the meantime, in order to generate a rotating force enough to rotate the drum 9, it is preferable that the electric magnets on the stator 7 have 36 or more poles.
A large capacity drum type washing machine, for holding a large quantity of laundry greater than 10kg, is required to have the phase angle of the current supplied to the stator 7 controlled accurately at an initial starting. If the stator 7 has a number of poles smaller than the rotor 8, accurate control of application of power to the stator 7 is not possible.

Because the large capacity drum type washing machine has the drum 9 having a diameter greater than the present drum type washing machine, for holding more laundry, a greater initial torque is required. If the drum 9 is divided into four equal sections, an initial starting section between 0 - 90° involves a greatest load of the drum 9. Since the required torque increases gradually in the section, the required torque is the greatest at 90°.

For providing the required torque when initially starting the drum 9 rotating, an accurate control of the current to the stator 7 is required. That is, the current to the stator 7 is required to be applied at an accurate time for generating an adequate torque.

There is at least one Hall sensor 15 between the coils 720. The Hall sensor 15 measures an intensity of a magnetic field perpendicular to the current by using the Hall effect. In this instance, the Hall sensor 15 measures an accurate intensity of the magnetic field by measuring an electromotive force generated by the magnetic field perpendicular to a flow direction of the current, and amplifying and processing the electromotive force, appropriately.

For accurate control of the current applied to each of the coils 720, it is required that an adequate number of signals are detected at the Hall sensors 15.

However, since most of related art motors have 24 poles on the rotor, accurate control has been difficult. That is, during 360° rotation of the drum, the Hall sensors can detect 24 signals.

During the 90° rotation section at the initial starting of the drum, the Hall sensors can detect only 6 signals, i.e., 3 N pole signals, and 3 S pole signals.

Consequently, only 3 signals are detected in the initial starting section, with reference to which the controller controls the current applied to the stator 7. This inadequate number of signals results in failure in accurate detection of rotation speed and position of the drum 9, so it is difficult to accurately control the phase angle of the current applied to the stator 7.

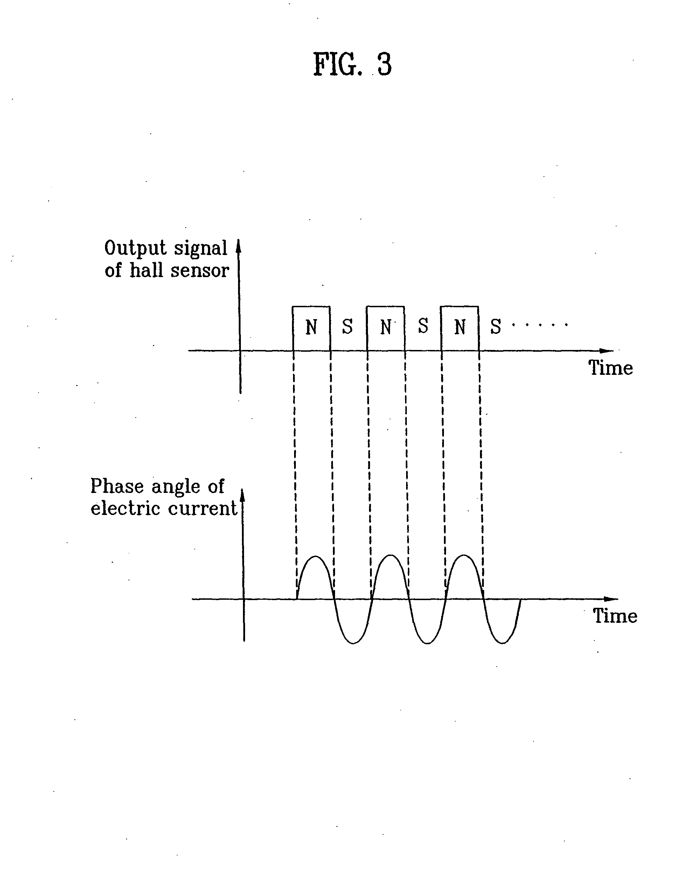

Referring to FIG. 3, in order to generate regular torque at the rotor 8, it is required that phase angles of the signal and the current are coincident. That is, the phase angle of the current is required to be controlled by the controller in response to the detected signal. However, in the case of the 24 pole rotor, because the accurate control of the phase angle of the current is not possible due to the inadequate number of signals detected at the Hall sensors 15, it is difficult to generate an efficient torque. Consequently, in the large capacity drum type washing machine, there is no option but to increase a size of the motor to increase the torque.

To solve this problem, the present invention suggests providing a BLDC motor to reduce a size of the motor, and accurate control of the phase angle of the current to the stator 7. To do this, the rotor 8 has a greater number of poles than the stator 7.

It is preferable that the number of poles of the stator 7 is 36 or more. Moreover, it is preferable that the number of poles of the rotor 8 is 48, more than that of the stator 7.

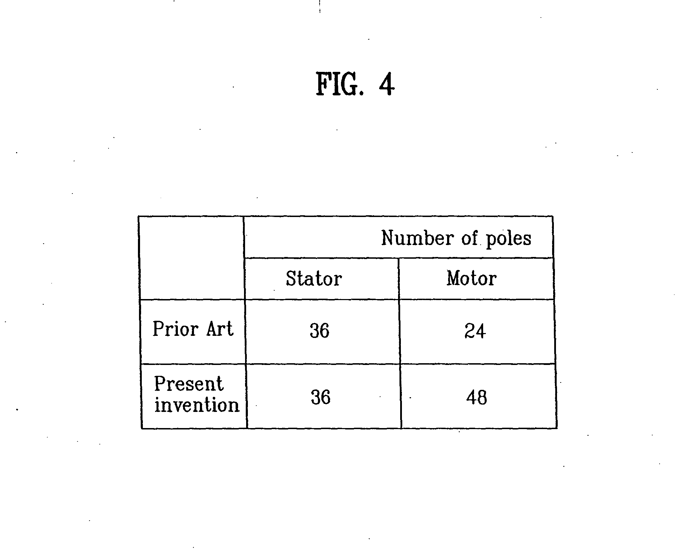

FIG 4 illustrates a table showing a number of poles of a stator and a rotor of the present invention.

Referring to FIG. 4, if the rotor 8 has 48 poles, the Hall sensors 15 can detect 12 pulse signals during the initial stating when the drum 9 rotates from 0 ~ 90°. That is, as the number of poles of the rotor 8 increases two times, the number of signals detected at the Hall sensors 15 increase by two times.

Eventually, the accurate detection of speed and position of the rotor 8 enables application of the current at an accurate phase angle to each of the coils 720 on the stator 7 in correspondence to the rotation speed of the drum 9. The accurate control of the phase angle of the current to the stator 7 results in the formation of a rotating magnetic field of the greatest possible size, to generate an adequate torque to rotate the drum 9.

When the rotor 8 has 48 or more poles, even if the axial width of the core 710 of the stator 7 is reduced, the desired torque can be obtained. That is, the axial width of the core 710 can be reduced to 16mm from 32mm.

That is, the increased number of poles of the rotor 8 of the present invention compared to the prior art, to enable to detect an adequate number of signals at the Hall sensors 15, permits the controller to accurately control the phase angle of the power to the stator 7. The application of power to the stator 7 at an accurate time permits generation of an adequate torque to the large capacity washing machine.

As has been described, the BLDC motor of the present invention includes a rotor having an improved number of poles which enables accurate control of the power to a stator. According to this, the motor can provide a torque required for driving the large capacity drum type washing machine.

Moreover, the axial size reduction of the motor compared to the prior art permits reduced production costs of the motor. The reduction of motor size permits increased drum capacity or reduced a total size of the drum type washing machine.

The BLDC motor of the present invention is applicable not only to the drum type washing machine, but also to the pulsator type washing machine.

It will be apparent to those skilled in the art that various modifications and variations can be made in the present invention without departing from the scope of the invention. Thus, it is intended that the present invention covers the modifications and variations provided they come within the scope of the appended claims and their equivalents.

## Claims

1. A BLDC motor comprising:
a stator having a core and coils and defining at least one pole;
a rotor having magnets forming a number of poles more than the number of poles of the stator, the rotor being rotatable by a rotating magnetic field formed between the stator and rotor poles;
a Hall sensor for detecting a pulse signal generated during rotation of the rotor; and
a controller for controlling power to be applied to the coils in response to the pulse signal.

2. The BLDC motor as claimed in claim 1, wherein the Hall sensor is provided between the coils of the stator; and/or
wherein the stator includes 36 or more poles; and/or
wherein the rotor is provided around the stator.

3. A BLDC motor comprising:
a stator having a core and coils and defming at least one pole;
a rotor having magnets forming a number of poles more than the number of poles of the stator, the rotor being rotatably provided around the stator;
a Hall sensor between the coils of the stator for detecting a pulse signal generated during rotation of the rotor; and
a controller for controlling power to be applied to the coils in response to the pulse signal detected at the Hall sensor.

4. The BLDC motor as claimed in claim 1 or claim 3, wherein the stator includes 36 poles, and the rotor includes 48 poles.

5. The BLDC motor as claimed in claim 1 or claim 3, wherein the core has an axial width of 16mm or less.

6. A large capacity drum type washing machine comprising:
a cabinet forming an exterior of the washing machine;
a drum rotatably mounted on an inside of the cabinet for holding laundry;
a BLDC motor including;
a stator having a core and coils and defining at least one pole,
a rotor having magnets forming a number of poles more than the number of poles of the stator, the rotor being rotatable by a rotating magnetic field formed between the stator and rotor poles,
a Hall sensor for detecting a pulse signal generated during rotation of the rotor, and
a controller for controlling power to be applied to the coils in response to the pulse signal, and;
a rotating shaft coupled between the drum and the BLDC motor.

7. The washing machine as claimed in claim 6, wherein the BLDC motor and the rotating shaft are connected by a belt and a pulley.

8. A large capacity drum type washing machine comprising:
a cabinet forming an exterior of the washing machine;
a drum rotatably mounted on an inside of the cabinet for holding laundry;
a BLDC motor including;
a stator having a core and coils and defining at least one pole,
a rotor having magnets forming a number of poles more than the number of poles of the stator, the rotor being rotatably provided around the stator,
a Hall sensor for detecting a pulse signal generated during rotation of the rotor, and
a controller for controlling power to be applied to the coils in response to the pulse signal, and;
a rotating shaft directly connected between the drum and the BLDC motor.

9. The washing machine as claimed in claim 6 or claim 8, wherein the Hall sensor is provided between the coils of the stator; and/or
wherein the stator includes 36 or more poles; and/or
wherein the stator includes 36 poles, and the rotor includes 48 poles; and/or
wherein the core has an axial width of 16mm or less.
